# DEMANDE DE BREVET EUROPEEN

(11) **EP 0 820 915 A1**
(43) Date de publication de la demande: **28.01.1998**
(21) Numéro de dépôt: 97401767.5
(22) Date de dépôt: 22.07.1997
(51) Int. Cl.: B62D 1/10

(54) **Dispositif de fixation d'un moyeu de volant de direction de véhicule, sur une extrémité d'un arbre de direction**

(30) Priorité: 25.07.1996 FR 9609393
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR)
(74) Mandataire: Habasque, Etienne Joel Jean-François

(57) **Abrégé**

Ce dispositif, dans lequel le moyeu (1) comporte un évidement axial (3) adapté pour recevoir l'extrémité de l'arbre (2), le moyeu et l'arbre comportant des moyens complémentaires d'immobilisation en position axiale, comprenant un évidement transversal (6) du moyeu (1) dont au moins une partie débouche dans l'évidement axial (3) de celui-ci en regard d'une gorge périphérique (7) de l'arbre, en position de montage du moyeu sur l'arbre, cet évidement transversal (6) étant adapté pour recevoir un organe de serrage (8) afin de serrer l'arbre dans le moyeu et immobiliser celui-ci en position axiale sur l'arbre, et des moyens complémentaires (4,5) d'immobilisation en rotation, est caractérisé en ce que l'arbre (2) porte des moyens de détrompage (9) pour le montage de l'organe de serrage (8).

## Description

La présente invention concerne un dispositif de fixation d'un moyeu de volant de direction de véhicule automobile, sur une extrémité d'un arbre de direction.

On connaît déjà dans l'état de la technique, un certain nombre de dispositifs de ce type.

On pourra par exemple se reporter au document FR-A-2 724 359 au nom de la Demanderesse, qui concerne un tel dispositif de fixation, dans lequel le moyeu comporte un évidement axial adapté pour recevoir l'extrémité de l'arbre, le moyeu et l'arbre comportant des moyens complémentaires d'immobilisation en position axiale, comprenant un évidement transversal du moyeu, dont au moins une partie débouche dans l'évidement axial de celui-ci en regard d'une gorge périphérique de l'arbre, en position de montage du moyeu sur l'arbre, cet évidement transversal du moyeu étant adapté pour recevoir un organe de serrage, afin de serrer l'arbre dans le moyeu et immobiliser celui-ci en position axiale sur l'arbre.

Dans ce document, l'organe de serrage comporte une portion en forme de coin adaptée pour faire saillie dans l'évidement axial du moyeu et pour venir en appui sur l'arbre, dans la gorge périphérique de celui-ci, afin de serrer cet arbre dans le moyeu.

De plus, l'arbre et le moyeu comportent des moyens complémentaires d'immobilisation en rotation constitués par exemple par des cannelures complémentaires de ces pièces.

On conçoit cependant qu'un tel dispositif de fixation présente un certain nombre d'inconvénients, notamment au niveau des risques de mauvais engagement de l'organe de serrage en position de blocage du moyeu sur l'arbre.

En effet, il peut arriver pour une raison ou pour une autre, que le moyeu soit mal engagé sur l'arbre et que l'opérateur de montage engage l'organe de serrage dans l'évidement transversal correspondant du moyeu et réussisse à visser plus ou moins celui-ci, en lui laissant croire que la fixation du moyeu sur l'arbre est correcte alors que celle-ci ne l'est pas, l'organe de serrage ne coopérant pas avec la gorge périphérique de l'arbre.

Le but de l'invention est donc de résoudre ces problèmes.

A cet effet, l'invention a pour objet un dispositif de fixation d'un moyeu de volant de direction de véhicule, sur une extrémité d'un arbre de direction, le moyeu comportant un évidement axial adapté pour recevoir l'extrémité de l'arbre, le moyeu et l'arbre comportant des moyens complémentaires d'immobilisation en position axiale, comprenant un évidement transversal du moyeu dont au moins une partie débouche dans l'évidement de celui-ci en regard d'une gorge périphérique de l'arbre, en position de montage du moyeu sur l'arbre, cet évidement transversal étant adapté pour recevoir un organe de serrage afin de serrer l'arbre dans le moyeu et immobiliser celui-ci en position axiale sur l'arbre et des moyens complémentaires d'immobilisation en rotation, caractérisé en ce que l'arbre porte des moyens de détrompage pour le montage de l'organe de serrage, comprenant des moyens de fixation sur cet arbre et des moyens de butée radiale s'étendant axialement, dans une rainure du moyeu croisant l'évidement transversal de celui-ci, entre l'extrémité de l'arbre et le bord de la gorge périphérique de celui-ci, pour faire obstacle au passage de l'organe de serrage tant que l'évidement transversal du moyeu n'est pas en position correcte de montage en regard de la gorge périphérique de l'arbre.

L'invention sera mieux comprise à la lecture de la description qui va suivre, donnée uniquement à titre d'exemple et faite en se référant aux dessins annexés, sur lesquels :
- la Fig.1 représente une vue en coupe schématique illustrant la structure et le fonctionnement d'un mode de réalisation d'un dispositif de fixation selon l'invention;
- la Fig.2 représente une vue en perspective d'un arbre de direction portant des moyens de détrompage entrant dans la constitution d'un dispositif selon l'invention;
- la Fig.3 représente une vue en coupe d'un exemple de réalisation de moyens de détrompage entrant dans la constitution d'un dispositif selon l'invention, en position sur un arbre; et
- la Fig.4 représente une vue en perspective illustrant une variante de réalisation de moyens de détrompage entrant dans la constitution d'un dispositif de fixation selon l'invention.

On reconnaît en effet sur ces figures, un dispositif de fixation d'un moyeu 1 d'un volant de direction de véhicule automobile, sur l'extrémité d'un arbre tubulaire de direction désigné par la référence générale 2.

Ce moyeu 1 comporte un évidement axial 3 adapté pour recevoir l'extrémité de l'arbre, en position de montage, et le moyeu et l'arbre comportent des moyens complémentaires d'immobilisation en position axiale et en rotation.

De façon classique, les moyens complémentaires d'immobilisation en rotation de ces pièces, comprennent par exemple des cannelures complémentaires ménagées sur les surfaces en regard de celles-ci.

C'est ainsi par exemple que l'arbre 2 comporte des cannelures externes désignées par la référence générale 4 adaptées pour coopérer avec des cannelures internes 5 du moyeu 1.

Par ailleurs, les moyens complémentaires d'immobilisation en position axiale du moyeu sur l'arbre comprennent un évidement transversal du moyeu, désigné par la référence générale 6 sur ces figures, dont au moins une partie débouche dans l'évidement axial 3 de celui-ci, en regard d'une gorge périphérique 7 de l'arbre, en position de montage.

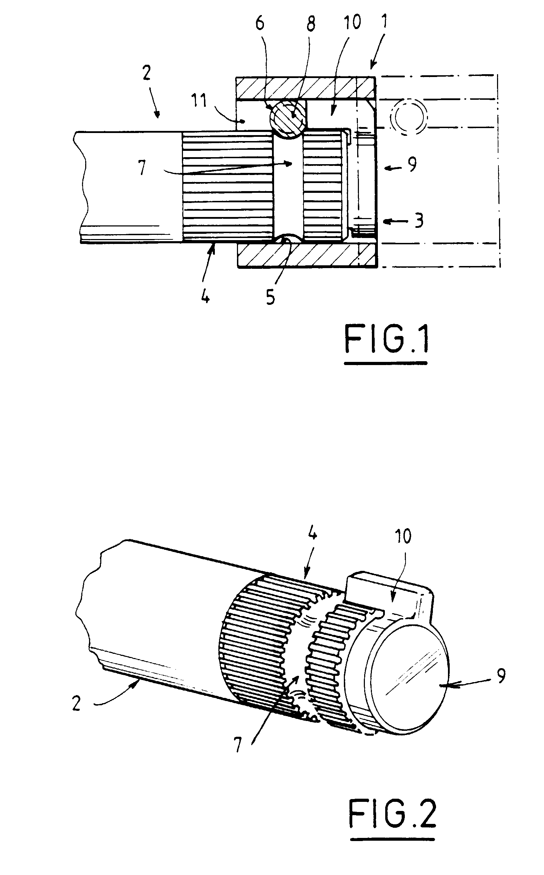

Cet évidement transversal est adapté pour recevoir un organe de serrage tel que celui illustré sur cette figure 1 et désigné par la référence générale 8, afin de serrer l'arbre dans le moyeu et immobiliser celui-ci en position axiale sur l'arbre.

Pour de plus amples renseignements concernant la structure et le fonctionnement d'un tel dispositif, on pourra se reporter au document mentionné précédemment.

Selon l'invention, l'arbre de direction 2 porte des moyens de détrompage pour le montage de l'organe de serrage, désignés par la référence générale 9 sur cette figure 1, et disposés à l'extrémité de celui-ci.

Ces moyens de détrompage 9 comporte des moyens de fixation sur cet arbre et des moyens de butée radiale, désignés par la référence générale 10 sur cette figure 1, s'étendant axialement, dans une rainure 11 du moyeu croisant l'évidement transversal 6 de celui-ci, entre l'extrémité de l'arbre et le bord de la gorge périphérique 7 de l'arbre, pour faire obstacle au passage de l'organe de serrage 8 tant que l'évidement transversal 6 du moyeu n'est pas en position correcte de montage en regard de la gorge périphérique 7 de l'arbre.

Ce fonctionnement est illustré sur cette figure 1, dans laquelle on a représenté en traits pointillés, un moyeu avant son engagement sur l'arbre et en traits pleins, une position correcte de montage du moyeu 1 autour de l'extrémité correspondante de l'arbre 2.

On conçoit en effet en regard de cette figure, que tant que l'évidement transversal 6 de ce moyeu n'est pas en regard de la gorge périphérique 7 de l'arbre, l'organe de serrage 8 ne peut pas être complètement engagé par un opérateur de montage dans l'évidement trnsversal 6 correspondant du moyeu, du fait de la présence de la portion de butée radiale 10 des moyens de détrompage, qui empêchent cet engagement.

Comme on peut le voir sur la figure 2, les moyens de butée radiale 10 s'étendant axialement entre l'extrémité de l'arbre 2 et le bord de la gorge périphérique 7 de celui-ci, peuvent se présenter sous la forme d'au moins une languette axiale, présentant par exemple un bord avant de section progressivement décroissante, permettant de faciliter l'engagement et le passage du moyeu, et plus particulièrement de la rainure 11 de celui-ci, sur cette languette.

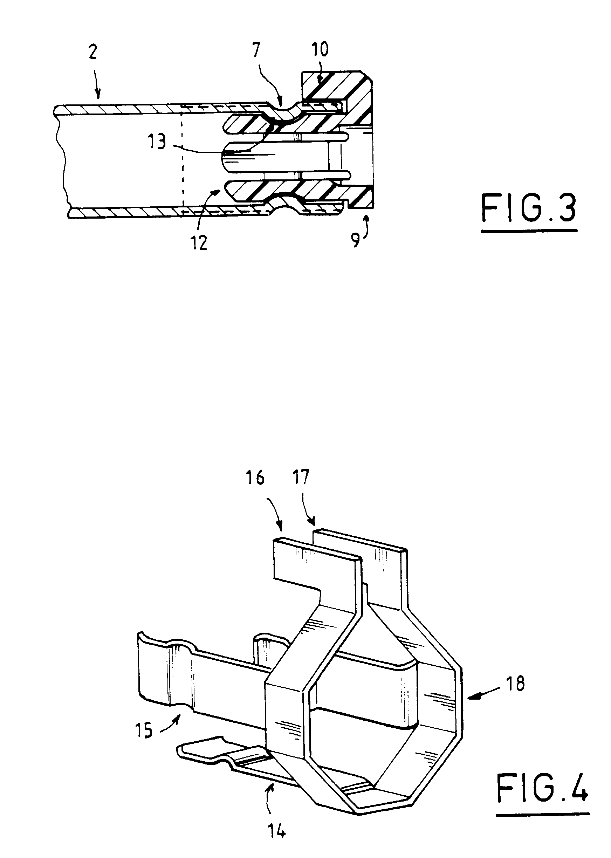

Comme cela ressort plus clairement de la figure 3 et comme cela a été indiqué précédemment, ces moyens de détrompage 9 comportent des moyens de fixation sur l'arbre qui sont désignés par la référence générale 12 sur cette figure.

Ces moyens de fixation peuvent par exemple comporter des moyens d'accrochage par emmanchement élastique sur la paroi interne de l'arbre de direction, ces moyens de fixation par emmanchement élastique comprenant par exemple des pattes élastiques adaptées pour s'engager sur une nervure interne 13 de l'arbre, cette nervure interne étant prévue en regard de la gorge périphérique 7 de celui-ci.

En fait, cette gorge périphérique 7 peut être réalisée par déformation de matière, permettant de former une gorge à la surface externe de cet arbre, et une nervure correspondante 17 sur la surface interne de celui-ci.

On conçoit alors que le montage de ces moyens de détrompage sur l'arbre est relativement simple, dans la mesure où il suffit à un opérateur de montage d'engager les pattes élastiques 12 des moyens de détrompage 9 dans l'arbre 2, pour franchir la nervure interne 13 de celui-ci, afin d'assurer l'accrochage de ces moyens sur cet arbre.

On notera également que dans ce cas, les moyens de détrompage 9 sont montés rotatifs par rapport à l'arbre, ce qui permet en outre un réglage de la position angulaire du moyeu et donc du volant sur l'arbre.

Les moyens de détrompage peuvent par exemple être réalisés par moulage en matière plastique.

Il va de soi bien entendu que différents modes de réalisation de ces moyens de détrompage peuvent être envisagés, comme celui représenté sur la figure 4, dans laquelle les moyens de détrompage sont désignés par la référence générale 14 et comportent des moyens de fixation se présentant sous la forme de pattes élastiques 15 et de moyens de butée qui se présentent sous la forme de deux languettes correspondantes 16 et 17, ménagées à chaque extrémité d'une âme de liaison 18 de ces différentes parties de ces moyens.

Dans ce cas, ces moyens de détrompage sont formés par découpe et conformation par exemple d'un flanc de tôle.

Il va de soi bien entendu que d'autres modes de réalisation de ces moyens peuvent être envisagés.

## Revendications

1. Dispositif de fixation d'un moyeu (1) de volant de direction de véhicule, sur une extrémité d'un arbre de direction (2), le moyeu (1) comportant un évidement axial (3) adapté pour recevoir l'extrémité de l'arbre (2), le moyeu et l'arbre comportant des moyens complémentaires d'immobilisation en position axiale, comprenant un évidement transversal (6) du moyeu (1) dont au moins une partie débouche dans l'évidement axial (3) de celui-ci en regard d'une gorge périphérique (7) de l'arbre, en position de montage du moyeu sur l'arbre, cet évidement transversal (6) étant adapté pour recevoir un organe de serrage (8) afin de serrer l'arbre dans le moyeu et immobiliser celui-ci en position axiale sur l'arbre et des moyens complémentaires (4,5) d'immobilisation en rotation, caractérisé en ce que l'arbre (2) porte des moyens de détrompage (9;14) pour le montage de l'organe de serrage (8), comprenant des moyens (12;15) de fixation sur cet arbre et des moyens (10;16,17) de butée radiale s'étendant axialement, dans une rainure (11) du moyeu, croisant l'évidement transversal (6) de celui-ci, entre l'extrémité de l'arbre et le bord de la gorge périphérique (7) de celui-ci, pour faire obstacle au passage de l'organe de serrage (8) tant que l'évidement transversal (6) du moyeu (1) n'est pas en position correcte de montage en regard de la gorge périphérique (7) de l'arbre.

2. Dispositif selon la revendication 1, caractérisé en ce que les moyens de fixation (12;15) des moyens de détrompage (9;14) comprennent des moyens élastiques d'accrochage de celui-ci sur la paroi interne de l'arbre.

3. Dispositif selon la revendication 2, caractérisé en ce que les moyens élastiques d'accrochage comprennent des pattes élastiques (12;15).

4. Dispositif selon la revendication 2 ou 3, caractérisé en ce que les moyens élastiques (12;15) sont adaptés pour s'engager sur une nervure interne (13) de l'arbre.

5. Dispositif selon la revendication 4, caractérisé en ce que la nervure interne (13) est située en regard de la gorge périphérique (7) de celui-ci.

6. Dispositif selon l'une quelconque des revendications précédentes, caractérisé en ce que les moyens de butée axiale comportent au moins une languette axiale (10;16,17).

7. Dispositif selon l'une quelconque des revendications précédentes, caractérisé en ce que les moyens de détrompage (9;14) sont montés rotatifs par rapport à l'arbre (2).

8. Dispositif selon l'une quelconque des revendications précédentes, caractérisé en ce que les moyens de détrompage (14) sont formés par découpe et conformation d'un flanc de tôle.

9. Dispositif selon l'une quelconque des revendications 1 à 7, caractérisé en ce que les moyens de détrompage (9) sont formés par moulage en matière plastique.
